# EUROPÄISCHE PATENTSCHRIFT

(11) **EP 3 795 420 B1**
(45) Veröffentlichungstag und Bekanntmachung des Hinweises auf die Patenterteilung: **01.05.2024**
(21) Anmeldenummer: 19198085.3
(22) Anmeldetag: 18.09.2019
(51) Int. Cl.: B60P 7/15, B61D 45/00

(54) **SPERRBALKEN**
BLOCKING BAR
POUTRES DE BLOCAGE

(43) Veröffentlichungstag der Anmeldung: 24.03.2021
(73) Patentinhaber: WISTRA GmbH Cargo Control, 23923 Selmsdorf (DE)
(72) Erfinder: Christian Birenheide, 23919 Berkenthin (DE)
(74) Vertreter: Patentanwälte Hemmer Lindfeld Frese Partnerschaft mbB

(56) Entgegenhaltungen:
- DE-T2- 69 932 046
- DE-U1-202019 100 808
- US-A- 4 249 761
- US-A1- 2005 268 432

## Beschreibung

Die Erfindung betrifft einen Sperrbalken für ein Ladungssicherungssystem mit Zurrpunkten, aufweisend zumindest zwei linear zueinander bewegbare Teleskopabschnitte.

Zum Sichern von Ladung in Fahrzeugen sind Ladungssicherungssysteme in unterschiedlichen Ausführungen bekannt. In verbreiteten Ladungssicherungssystemen werden Zurrpunkte eingesetzt, die fahrzeugseitig vorgesehen sind und die Aufnahme oder Verspannung von Zurrgurten und Netzen, Sperrbalken und dergleichen ermöglichen. Hiermit kann die Ladung straff in dem Fahrzeug gehalten und vor dem Verrutschen gesichert werden. Sperrbalken weisen hierfür in bekannten Ausführungen endseitige Beschläge auf, die jeweils in eine Öffnung eines Zurrpunktes eingesetzt werden, so dass sich der Sperrbalken bevorzugt quer (horizontal oder vertikal) zu zwei den betreffenden Raum des Fahrzeugs begrenzenden und voneinander beabstandeten Fahrzeugwänden erstreckt. Zur Anpassung an unterschiedliche Breiten des Fahrzeuginnenraums und zum Ermöglichen des Einsetzens weisen die Sperrbalken oftmals eine änderbare Länge auf. Typischerweise sind Sperrbalken entgegen einer Federkraft teleskopierbar und bestehen aus zwei ineinander angeordneten und teleskopierbaren Hohlprofilen. An ihren Enden befindet sich jeweils einer der Beschläge, zwischen denen eine Federkraft in Ausfahrrichtung wirksam ist.

Aus DE 20 2019 100 808 U1 zählt ein Sperrbalken zum Stand der Technik, dessen axiale Länge stufenlos veränderbar ist und der einen voreinstellbaren Federabschnitt aufweist. Der Sperrbalken soll in seiner Länge so eingestellt werden, dass er etwa 5 cm länger als die Öffnung gegenüberliegender Zurrpunkte, in die er eingesetzt werden soll, ist. Es wird dann zunächst ein Endbeschlag in einem Zurrpunkt festgelegt, wonach der Sperrbalken entgegen Federkraft ein Stuck zusammengeschoben wird und dann der andere Endbeschlag in dem gegenüberliegenden Zurrpunkt festgelegt wird und in dieser Stellung durch die Kraft der Feder kraftschlüssig verbleibt.

Eine Schwierigkeit bei der Verwendung eines solchen Sperrbalkens kann darin liegen, dass seine Länge im entspannten Zustand größer ist, als der Abstand zwischen den Fahrzeugwänden. Dadurch muss der Sperrbalken schräg in einen ersten Zurrpunkt gesetzt und unter permanenter Überwindung der Federkraft zusammengedrückt werden, sodass er in einen gegenüberliegend angeordneten zweiten Zurrpunkt eingesetzt werden kann. Bei bauartbedingt relativ hohen Federkräften kann dies für einen Benutzer recht anstrengend sein und könnte überdies zu einem Zerkratzen oder einer Beschädigung einer der Fahrzeugwände führen.

Insoweit günstiger ist der aus DE 699 32 046 T2 bekannte Sperrbalken, bei dem als Feder eine steuerbare Gasdruckfeder vorgesehen ist, die mittels eines am Sperrbalken von außen zu betätigen Ventils arretierbar ist. Die Gasdruckfeder wird manuell zusammengeschoben und arretiert, wonach der Sperrbalken mit einem Ende in einem Zurrpunkt festgelegt und dann so positioniert wird, dass der Endbeschlag auf den gegenüberliegenden Zurrpunkt gerichtet ist, wonach das Ventil für die Gasdruckfeder betätigt wird und der Sperrbalken durch den Gasdruck teleskopiert und in der festgelegten Stellung auch kraftschlüssig gehalten bleibt.

Die Bedienung des Ventils erfolgt von Hand, das Zusammendrucken der Gasdruckfeder erfolgt ebenfalls manuell, sodass die ordnungsgemäße Befestigung und das Lösen des Sperrbalkens einige Übung erfordert.

Aufgabe der vorliegenden Erfindung ist es, einen Sperrbalken für ein Ladungssicherungssystem mit Zurrpunkten bereitzustellen, der möglichst einfach zu lösen bzw. festzulegen ist, einer Beschädigung der Fahrzeugwände entgegenwirkt und dennoch hohe Kräfte aufnehmen kann.

Diese Aufgabe wird gemäß der Erfindung durch einen Sperrbalken mit den in Anspruch 1 angegebenen Merkmalen gelöst. Vorteilhafte Ausgestaltungen des Sperrbalkens ergeben sich aus den Unteransprüchen, der nachfolgenden Beschreibung und den Zeichnungen, wobei die in den Unteransprüchen und der Beschreibung angegebenen Merkmale jeweils für sich aber auch in geeigneter Kombination anwendbar sind.

Der erfindungsgemäße Sperrbalken für ein Ladungssicherungssystem mit Zurrpunkten weist zumindest zwei linear zueinander bewegbare Teleskopabschnitte und zwei an einander entgegengesetzten Enden des Sperrbalkens angeordnete Endbeschläge zum Eingreifen in jeweils einen Zurrpunkt, und ein in dem Sperrbalken angeordnetes und mit den Teleskopabschnitten gekoppeltes Federelement, das dazu ausgebildet ist, die Teleskopabschnitte in eine ausgefahrene Stellung zu drängen, auf. Erfindungsgemäß weist der Sperrbalken eine Verriegelungseinheit auf, die dazu ausgebildet ist, die Teleskopabschnitte zum Einsetzen des

Ein Grundgedanke der vorliegenden Erfindung liegt darin, dass der Sperrbalken mit einer Verriegelungseinheit ausgestattet ist. Die beiden Teleskopabschnitte können in einer eingefahrenen Stellung, die bevorzugt annähernd dem Zustand der geringsten Länge des Sperrbalkens entspricht, arretiert werden. Das Einsetzen des Sperrbalkens in zwei einander gegenüberliegende Zurrpunkte wird durch die geringe Länge stark vereinfacht. Ein Benutzer kann zunächst die Länge des Sperrbalkens durch Zusammenschieben der Teleskopabschnitte in die eingefahrene Stellung ändern und den Sperrbalken arretieren. Damit ist die Handhabung im Innern des Fahrzeugs deutlich erleichtert, denn der Sperrbalken ist handlicher und die Gefahr ist gering, dass beim Bewegen des Sperrbalkens eine Fahrzeugwand beschädigt wird. Der Sperrbalken kann in der eingefahrenen Stellung quer an einer Fahrzeugwand ausgerichtet in einen darin befindlichen Zurrpunkt eingesetzt werden, um nach Lösen der Verriegelungseinheit den anderen Endbeschlag in einen gegenüberliegenden Zurrpunkt zu führen. Beim Einsetzen muss der Benutzer aufgrund der Arretierung folglich nicht die möglicherweise recht starke Federkraft manuell kompensieren und kann einen sich ausfahrenden Sperrbalken deutlich leichter in den betreffenden Zurrpunkt führen.

Gemäß der Erfindung weist das Federelement eine bewegbar gelagerte Federstange auf, die durch eine Federkraft aus einem Federgehäuse gedrängt wird, wobei das Federgehäuse und die Federstange einen bistabilen Rastmechanismus als Verriegelungseinheit aufweisen. Ein solcher Rastmechanismus ist in der Lage, zwei unterschiedliche Raststellungen einzunehmen, die jeweils für sich stabil sind. Durch die Kopplung mit den Teleskopabschnitten befinden sich diese ebenso in beiden Raststellungen in einem jeweils stabilen Zustand. Ein stabiler Zustand ist besonders bevorzugt in der eingefahrenen Stellung erreicht und umfasst eine Arretierung der Federstange. Ein anderer stabiler Zustand kann beispielsweise dadurch erreicht sein, dass das Federelement frei auf die Teleskopabschnitte einwirken kann und sich dadurch die Länge des Sperrbalkens bis zu einem bauartbedingten Maximum verändert.

Aus US 4,249,761 ist ein bistabiler Rastmechanismus für die Tür eines Schrankes bekannt. Dieser ist zum Einsatz an einem Sperrbalken allerdings nicht geeignet, da beim Sperrbalken endseitig Endbeschläge zum Eingliedern in die Zurrpunkte vorgesehen sind.

Es ist besonders vorteilhaft, wenn das Federelement die Verriegelungseinheit aufweist. Da das Federelement bei fehlender äußerer Einwirkung die Länge des Sperrbalken bestimmt, ist das Arretieren des Federelements sinnvoll. Dadurch kann weiterhin eine Verspannung und eventuelle Verkantung der Teleskopabschnitte verhindert werden. Die Verriegelungseinheit wird weiterhin vor Verschmutzung oder Beschädigung geschützt.

Es ist vorteilhaft, wenn das Federelement dazu ausgebildet ist, durch Zusammendrücken der Teleskopabschnitte in eine eingefahrene Stellung die Teleskopabschnitte zu arretieren und durch erneutes Zusammendrücken der Teleskopabschnitte in der eingefahrenen Stellung die Arretierung zu lösen. Die Verriegelungseinheit ähnelt dann einer Kugelschreibermechanik, die technisch ausgereift und beliebig skalierbar ist. Die Bedienung der Verriegelungseinheit und folglich das Arretieren des Sperrbalkens ist dadurch sehr einfach, da es keine Nutzung einer separaten Mechanik erfordert.

Besonders bevorzugt weist das Federelement eine Gasdruckfeder auf. Gasdruckfedern können eine hohe Leistungsdichte, können hohe Federkräfte bereitstellen und zudem die Geschwindigkeit der durch die Federkraft bedingten Bewegung beeinflussen. Zudem sind bei einem begrenzten Bauraum große Verfahrwege bei einer geringeren Progression im Vergleich zu einer Schraubenfeder möglich.

Die Teleskopabschnitte können hohlzylindrisch ausgeführt sein. Das Federelement lässt sich folglich in beiden Teleskopabschnitten unterbringen, was einer Zentrierung des Federelements zur Zentrierung des Schwerpunkts entgegenkommt, so dass die Handhabung des Sperrbalkens erleichtert wird. Zudem bieten hohlzylindrische Teleskopabschnitten mehr Bauraum zur Integration des Federelements, so dass die Herstellung des Sperrbalkens aufgrund der Verwendbarkeit kommerziell verfügbarer Federelemente kostengünstig ist.

In einer besonders vorteilhaften Ausführungsform ist das Federelement gedämpft. Dies kann insbesondere bei der Verwendung einer Gasdruckfeder erreicht werden, die einen bewegbaren Kolben mit einer Durchströmöffnung aufweist, deren Größe die Dämpfungswirkung bestimmt.

Die Erfindung ist nachfolgend anhand eines in der Zeichnung dargestellten Ausführungsbeispiels näher erläutert. Es zeigen:
- Fig. 1a und 1b: eine Seitenansicht und eine Schnittansicht eines Sperrbalkens in einer eingefahrenen Stellung,
- Fig. 2a und 2b: eine Seitenansicht und eine Schnittansicht eines Sperrbalkens in einer ausgefahrenen Stellung,
- Fig. 3a und 3b: einen Teilschnitt des Sperrbalkens und der darin enthaltenen Verriegelungseinheit in der eingefahrenen Stellung (Fig. 3a) und der ausgefahrenen Stellung (Fig. 3b) und
- Fig. 4: eine schematische Draufsicht auf einen Fahrzeugraum mit Zurrpunkten und einem darin angeordneten Sperrbalken.

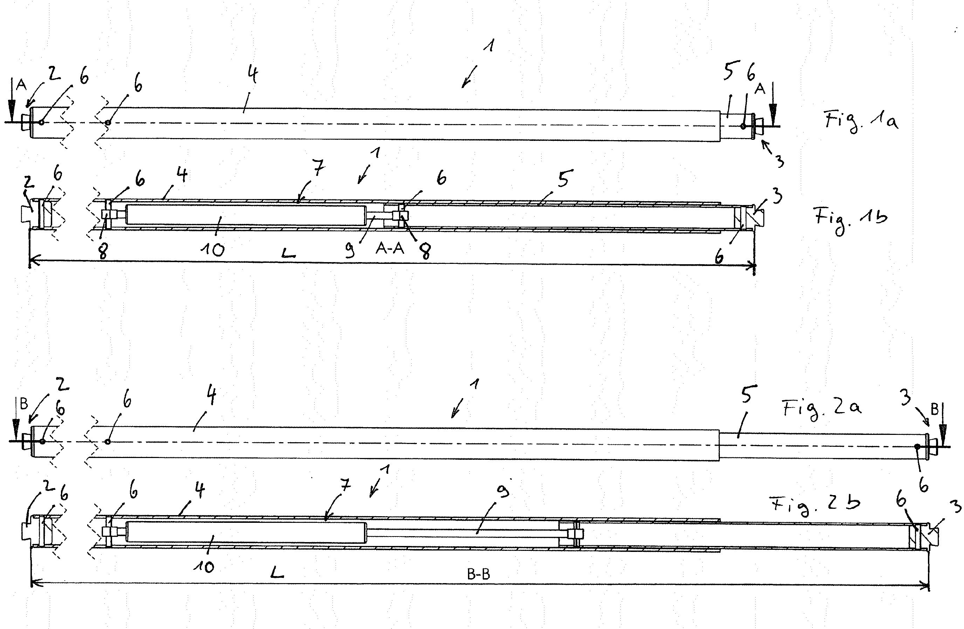

Fig. 1a zeigt einen teleskopierbaren, d.h. in einer Länge L veränderlichen, Sperrbalken 1 in einer eingefahrenen Stellung. Der Sperrbalken 1 ist für ein in einem Fahrzeug integriertes Ladungssicherungssystem mit Zurrpunkten ausgelegt und weist hierfür an einem Ende einen ersten Endbeschlag 2 und an einem entgegengesetzten Ende einen zweiten Endbeschlag 3 auf. Ein erster Teleskopabschnitt 4 ist als Rohr ausgebildet, in dem ein zweiter Teleskopabschnitt 5 verschiebbar eingesteckt ist. Der zweite Teleskopabschnitt 5 ist ebenso beispielhaft als Rohr ausgebildet. Durch ein Verschieben des zweiten Teleskopabschnitts 5 in dem ersten Teleskopabschnitt 4 kann die Länge L des Sperrbalkens 1 in Grenzen geändert werden. Der Abstand der Endbeschläge 2 und 3 wird dadurch geändert. Durch Reduzieren der Länge L wird der Sperrbalken 1 handlicher und lässt sich einfacher in die Zurrpunkte einsetzen. Durch Vergrößern der Länge L wird die formschlüssige Verbindung mit den Zurrpunkten ermöglicht. Gleichzeitig wird dadurch eine Anpassung an unterschiedliche Fahrzeugbreiten durchgeführt.

Fig. 1b zeigt den Sperrbalken 1 in einer Schnittdarstellung A-A, deren Lage und Ausrichtung in Fig.1a angegeben ist. Die Endbeschläge 2 und 3 sind exemplarisch als separat gefertigte Elemente angedeutet, die jeweils in ein freies Ende des ersten Teleskopabschnitts 4 bzw. des zweiten Teleskopabschnitts 5 eingesteckt und dort mit einem Querstift 6 gesichert sind. Die Endbeschläge 2 und 3 können auf einer nach außen gewandten Seite jeweils einen länglichen Vorsprung aufweisen. Dieser kann sich, wie beispielhaft gezeigt, nach außen hin aufweiten. Damit können die Endbeschläge 2 und 3 in einen als Öffnung realisierten Zurrpunkt eingesteckt werden, um in Öffnungskanten des Zurrpunkts einzugreifen.

Im Innern des ersten Teleskopabschnitts 4 ist ein Federelement 7 angeordnet, das beidseitig ein Auge, einen Gabelkopf oder ein anderes Beschlagelement 8 aufweist. Eines der Beschlagelemente 8 ist dabei mit dem ersten Teleskopabschnitt 4 und eines mit dem zweiten Teleskopabschnitt 5 verbunden. Dies könnte ebenso zur Vereinfachung des Aufbaus des Sperrbalkens über jeweils einen Querstift 6 erfolgen, der durch das betreffende Beschlagelement 8 ragt und in dem betreffenden Teleskopabschnitt befestigt ist.

Das Federelement 7 ist beispielhaft eine Gasdruckfeder und weist ein Federgehäuse 10 sowie eine darin linear verschiebbar gelagerte Federstange 9 auf. Diese weist üblicherweise einen hier nicht näher gezeigten Kolben auf. Das Federelement 7 ist dazu ausgebildet, die Federstange 9 durch Gasdruck aus dem Federgehäuse 10 zu drängen. Durch die Verbindung des Federelements 7 mit den Teleskopabschnitten 4 und 5 wird folglich der zweite Teleskopabschnitt 5 aus dem ersten Teleskopabschnitt 4 gedrängt. Der Sperrbalken 1 drängt daher stets in einen Zustand größerer Länge.

Eine Besonderheit des Federelements 7 liegt nun darin, dass dort eine hier nicht im Detail gezeigte Verriegelungseinheit vorgesehen ist. Diese ist dazu ausgebildet, die beiden Teleskopabschnitte 4 und 5 in einer eingefahrenen Stellung zu arretieren. In diesem Beispiel ist die Verriegelungseinheit derart ausgeführt, dass durch Zusammenschieben der Teleskopabschnitte 4 und 5 in eine eingefahrene Stellung und anschließendes Loslassen die Teleskopabschnitte 4 und 5 arretiert werden. Durch erneutes Zusammendrücken der beiden Teleskopabschnitte 4 und 5 in dieser Stellung wird die Arretierung wieder gelöst. Folglich kann der Sperrbalken 1 nach dem Kugelschreiberprinzip in seiner eingefahrenen Stellung arretiert werden. Ein Benutzer kann folglich bei arretiertem Sperrbalken 1 den ersten Endbeschlag 2 oder den zweiten Endbeschlag 3 in einen Zurrpunkt einsetzen und durch Zusammendrücken der Teleskopabschnitte 4 und 5 die Arretierung lösen, sodass der Sperrbalken 1 sich durch die Federkraft des Federelements 7 wieder verlängert.

Dies wird in den Figuren 2a und 2b gezeigt. Hier ist der zweite Teleskopabschnitt 5 deutlich aus dem ersten Teleskopabschnitt 4 herausgefahren, sodass eine Länge L des Sperrbalkens 1 vergrößert ist. Es ist besonders sinnvoll, das Federelement 7 mit einem Dämpfer auszustatten, sodass nach dem Lösen der Arretierung eine sanfte Ausfahrbewegung erfolgt. Dies könnte durch eine entsprechend dimensionierte Durchströmöffnung in einem Kolben des als Gasdruckfeder ausgeführten Federelements 7 erfolgen.

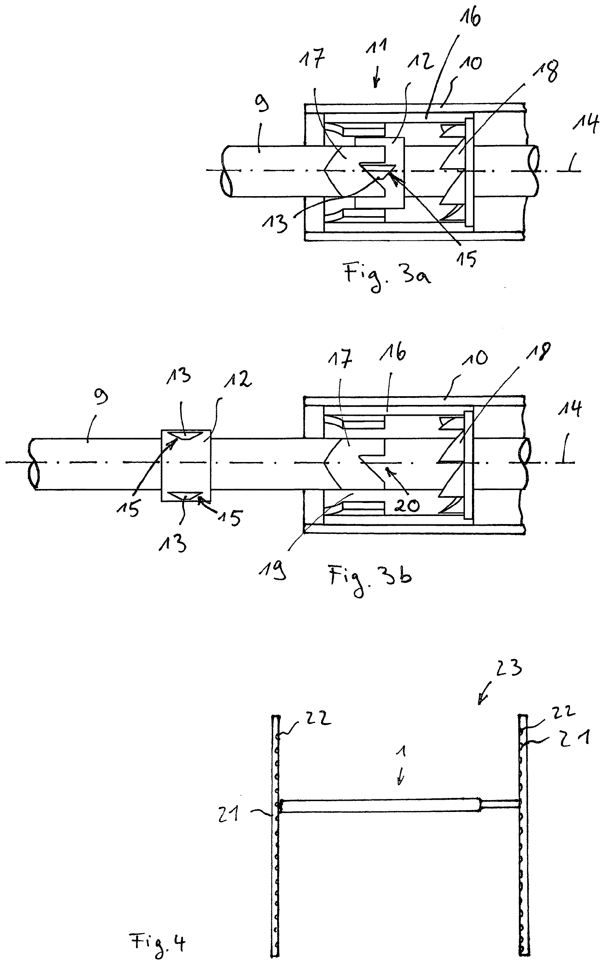

Fig. 3a und 3b zeigen einen Teilschnitt des Sperrbalkens 1 mit einer in dem Federelement 7 integrierten beispielhaften Verriegelungseinheit 11. In beiden Darstellungen ist jeweils ein Teil der Federstange 9 zu sehen, die aus dem Federgehäuse 10 ragt. An der Federstange 9 ist exemplarisch drehbar aber nicht verschiebbar eine Nockentrommel 12 angeordnet, die umfangsseitig mit mehreren Nocken 13 ausgestattet ist, welche sich über eine gewisse Strecke in radialer Richtung von der Nockentrommel 12 aus nach außen erstrecken. Die Nocken 13 weisen beispielhaft eine trapezförmige Grundfläche auf, die in Umfangsrichtung der Nockentrommel 12 zwei zueinander parallele Längskanten aufweisen, die außerdem parallel zu einer Längsachse 14 des Federelements 7 ausgerichtet sind. Dazwischen sind zwei stirnseitig angeordnete, schräge Rampenflächen 15 eingeschlossen.

In dem Federgehäuse 10 befindet sich indes eine Nockenhülse 16, die exemplarisch in der Nähe eines offenen Endes des Federgehäuses 10 positioniert ist. Die Nockenhülse weist Führungselemente 17 und eine entlang der Längsachse 14 weiter innen liegende Innenverzahnung 18 auf. Die Nockenhülse 16 und die Nockentrommel 12 sind konzentrisch zueinander angeordnet. Die Nocken 13 sind derart geformt, dass sie in axialer Richtung durch Führungsschlitze 19 zwischen den einzelnen Führungselementen 17 der Nockenhülse 16 verschoben werden können, wenn sie sich axial davor oder dahinter befinden. Geraten die Nocken 13 durch die Führungsschlitze 19, kann die Federstange 9 durch den Federdruck aus dem Federgehäuse 10 ungehindert ausgefahren werden.

Wird die Federstange 9 jedoch in das Federgehäuse 10 eingeschoben und geraten die Rampenflächen 15 der Nocken 13 nach Durchlaufen der Führungsschlitze 19 in Flächenkontakt mit der Innenverzahnung 18, werden sie an dieser in Umfangsrichtung ausgelenkt. Folglich verdreht sich die Nockentrommel 12 an der Innenverzahnung 18 leicht, sodass die Nocken 13 nach dem Loslassen der Federstange 9 schließlich in die Arretiervertiefung 20 geraten. Durch die anhaltende Federkraft werden die Nocken 13 in die Arretiervertiefung 20 gedrückt und dort bündig in ihrer momentanen Position gehalten. Die Federstange 9 kann dann nicht weiter aus dem Federgehäuse 10 ausgefahren werden und das Federelement 7 ist folglich arretiert. Der Sperrbalken 1 kann sich daraus resultierend nicht weiter ausdehnen.

Durch erneutes Einschieben der Federstange 9 in das Federgehäuse 10 werden die Nocken 13 erneut in Umfangsrichtung verdreht, so dass sie wieder axial vor den Führungsschlitzen 19 liegen. Die Arretierung des Federelements 7 und demzufolge des Sperrbalkens 1 ist dann wieder gelöst.

Schließlich zeig Fig. 4 eine Draufsicht auf einen Fahrzeugraum 23, der durch zwei Fahrzeugwände 21 nach außen hin begrenzt wird. In den Fahrzeugwänden 21 befinden sich mehrere Zurrpunkte 22, die beispielsweise in einem Schienensystem realisiert sind. Der erfindungsgemäße Sperrbalken 1 lässt sich durch seine Arretierbarkeit sehr leicht in dem Fahrzeugraum 23 handhaben und an unterschiedliche Breiten verschiedener Fahrzeugräume anpassen.

### Bezugszeichenliste

- 1: Sperrbalken
- 2: Endbeschlag
- 3: Endbeschlag
- 4: erster Teleskopabschnitt
- 5: zweiter Teleskopabschnitt
- 6: Querstift
- 7: Federelement
- 8: Beschlagelement
- 9: Federstange
- 10: Federgehäuse
- 11: Verriegelungseinheit
- 12: Nockentrommel
- 13: Nocke
- 14: Längsachse
- 15: Rampenfläche
- 16: Nockenhülse
- 17: Führungselement
- 18: Innenverzahnung
- 19: Führungsschlitz
- 20: Arretiervertiefung
- 21: Fahrzeugwand
- 22: Zurrpunkt
- 23: Fahrzeugraum

- L: Länge

## Patentansprüche

1. Sperrbalken (1) für ein Ladungssicherungssystem mit Zurrpunkten (22), aufweisend zumindest zwei linear zueinander bewegbare Teleskopabschnitte (4, 5) und zwei an einander entgegengesetzten Enden des Sperrbalkens (1) angeordnete Endbeschläge (2, 3) zum Eingreifen in jeweils einen Zurrpunkt (22), und ein in dem Sperrbalken (1) angeordnetes und mit den Teleskopabschnitten (4, 5) gekoppeltes Federelement (7), das dazu ausgebildet ist, die Teleskopabschnitte (4, 5) in eine ausgefahrene Stellung zu drängen, wobei eine Verriegelungseinheit (11) vorgesehen ist, die dazu ausgebildet ist, die Teleskopabschnitte (4, 5) zum Einsetzen des Sperrbalkens (1) in zwei einander gegenüberliegende Zurrpunkte (22) lösbar in einer eingefahrenen Stellung zu arretieren, wobei das Federelement (7) eine bewegbar gelagerte Federstange (9) aufweist, die durch eine Federkraft aus einem Federgehäuse (10) gedrängt wird, **dadurch gekennzeichnet, dass** das Federgehäuse (10) und die Federstange (9) einen bistabilen Rastmechanismus als Verriegelungseinheit (11) aufweisen.

2. Sperrbalken (1) nach Anspruch 1, **dadurch gekennzeichnet, dass** das Federelement (7) die Verriegelungseinheit (11) aufweist.

3. Sperrbalken (1) nach Anspruch 1 oder 2, **dadurch gekennzeichnet, dass** das Federelement (7) dazu ausgebildet ist, durch Zusammendrücken der Teleskopabschnitte (4, 5) in eine eingefahrene Stellung die Teleskopabschnitte (4, 5) zu arretieren und durch erneutes Zusammendrücken der Teleskopabschnitte (4, 5) in der eingefahrenen Stellung die Arretierung zu lösen.

4. Sperrbalken (1) nach einem der vorhergehenden Ansprüche, **dadurch gekennzeichnet, dass** das Federelement (7) eine Gasdruckfeder aufweist.

5. Sperrbalken (1) nach einem der vorhergehenden Ansprüche, **dadurch gekennzeichnet, dass** die Teleskopabschnitte (4, 5) hohlzylindrisch ausgeführt sind.

6. Sperrbalken (1) nach einem der vorhergehenden Ansprüche, **dadurch gekennzeichnet, dass** das Federelement (7) gedämpft ist.

## Claims

1. A blocking bar (1) for a load securing system with lashing points (22), comprising at least two telescopic sections (4, 5) which are linearly movable relative to one another and two end fittings (2, 3) arranged at opposite ends of the blocking bar (1) for engaging in each case in a lashing point (22), and a spring element (7) which is arranged in the blocking bar (1) and coupled to the telescopic sections (4, 5) and which is configured to force the telescopic sections (4, 5) into an extended position, wherein a locking unit (11) is provided which is configured to releasably lock the telescopic sections (4, 5) in a retracted position for inserting the blocking bar (1) into two opposite lashing points (22), wherein the spring element (7) has a movably mounted spring rod (9) which is displaced out of a spring housing (10) by a spring force, **characterized in that** the spring housing (10) and the spring rod (9) comprise a bistable latching mechanism as a locking unit (11).

2. The blocking bar (1) according to claim 1, **characterized in that** the spring element (7) comprises the locking unit (11).

3. The blocking bar (1) according to claim 1 or 2, **characterized in that** the spring element (7) is configured to lock the telescopic sections (4, 5) by pressing the telescopic sections (4, 5) together into a retracted position and to release the locking by pressing the telescopic sections (4, 5) together again in the retracted position.

4. The blocking bar (1) according to any one of the preceding claims, **characterized in that** the spring element (7) comprises a gas pressure spring.

5. The blocking bar (1) according to any one of the preceding claims, **characterized in that** the telescopic sections (4, 5) are designed in a hollow cylindrical manner.

6. The blocking bar (1) according to any one of the preceding claims, **characterized in that** the spring element (7) is damped.

## Revendications

1. Barre de blocage (1) pour un système de fixation de charge avec des points d'arrimage (22), comportant au moins deux sections télescopiques (4, 5) déplaçables de façon linéaire l'une par rapport à l'autre et deux ferrures d'extrémité (2, 3) disposées aux extrémités opposées l'une à l'autre de la barre de blocage (1) pour une mise en prise dans respectivement un point d'arrimage (22) et un élément faisant ressort (7) disposé dans la barre de blocage (1) et couplé aux sections télescopiques (4, 5), qui est constitué pour repousser les sections télescopiques (4, 5) dans une position sortie, sachant qu'une unité de verrouillage (11) est prévue, qui est constituée pour bloquer les sections télescopiques (4, 5) de façon amovible dans une position rentrée pour insertion de la barre de blocage (1) dans deux points d'arrimage (22) opposés l'un à l'autre, sachant que l'élément faisant ressort (7) comporte une barre à ressort (9) logée de façon mobile, qui est repoussée par une force élastique hors d'un boîtier de ressort (10), **caractérisée en ce que** le boîtier de ressort (10) et la barre à ressort (9) comportent un mécanisme d'enclenchement bistable en tant qu'unité de verrouillage (11).

2. Barre de blocage (1) selon la revendication 1, **caractérisée en ce que** l'élément faisant ressort (7) comporte l'unité de verrouillage (11).

3. Barre de blocage (1) selon la revendication 1 ou 2, **caractérisée en ce que** l'élément faisant ressort (7) est constitué pour bloquer les sections télescopiques (4, 5) par compression des sections télescopiques (4, 5) dans une position rentrée et libérer le blocage dans la position rentrée par une nouvelle compression des sections télescopiques (4, 5).

4. Barre de blocage (1) selon l'une quelconque des revendications précédentes, **caractérisée en ce que** l'élément faisant ressort (7) comporte un ressort pneumatique.

5. Barre de blocage (1) selon l'une quelconque des revendications précédentes, **caractérisée en ce que** les sections télescopiques (4, 5) sont exécutées cylindriques creuses.

6. Barre de blocage (1) selon l'une quelconque des revendications précédentes, **caractérisée en ce que** l'élément faisant ressort (7) est amorti.
